# FASCICULE DE BREVET EUROPEEN

(11) **EP 2 435 635 B1**
(45) Date de publication et mention de la délivrance du brevet: **15.01.2020**
(21) Numéro de dépôt: 10723648.1
(22) Date de dépôt: 19.05.2010
(51) Int. Cl.: E02F 3/36

(54) **DISPOSITIF DE SÉCURITÉ POUR ATTACHE RAPIDE DESTINÉE À FIXER UN OUTIL À L'EXTRÉMITÉ DU BRAS D'UNE PELLE HYDRAULIQUE OU ANALOGUE**
SICHERHEITSVORRICHTUNG MIT SCHNELLBEFESTIGUNGSMECHANISMUS ZUR BEFESTIGUNG EINES WERKZEUGS AM ENDE DES ARMS EINES HYDRAULIKBAGGERS ODER DERGLEICHEN
QUICK-FASTENING SAFETY DEVICE FOR ATTACHING A TOOL TO THE END OF THE ARM OF A HYDRAULIC POWER SHOVEL OR THE LIKE

(30) Priorité: 29.05.2009 FR 0902593
(43) Date de publication de la demande: 04.04.2012
(73) Titulaire: Klac Industrie, 45075 St Cyr En Val, Orleans Cedex 2 (FR)
(72) Inventeur: Morin, Christian, André, F-45380 La Chapelle Saint-Mesmin (FR); Morin Marcel, André, Jean, F-45650 Saint Jean Le Blanc (FR)
(74) Mandataire: Eidelsberg, Olivier Nathan
(86) Numéro de dépôt international: PCT/FR2010/000379
(87) Numéro de publication internationale: WO 2010/136664

(56) Documents cités:
- DE-U1-202006 018 263
- FR-A1- 2 703 113
- FR-A1- 2 765 601
- FR-A1- 2 809 779

## Description

La présente invention est relative à un dispositif de sécurité pour attache rapide destinée à fixer un outil à l'extrémité du bras d'une pelle hydraulique ou analogue, ci-après dénommée l'engin.

Une attache rapide est un ensemble mécanique comportant deux parties dont l'une est fixée à l'outil, un godet par exemple, tandis que l'autre est portée par le bras de l'engin.

L'état de la technique en la matière est constitué, notamment, par l'attache rapide décrite dans le brevet français publié sous le N° 2809779.

L'attache décrite dans ce brevet comporte deux parties, sensiblement en forme d'étrier, la première partie, solidaire du bras de l'engin, présentant un berceau pouvant s'insérer sous un arbre porté par la seconde partie, solidaire de l'outil.

La portion médiane de la seconde partie présente une extension, en forme de crochet, pouvant traverser une ouverture de la première partie et une ouverture d'une plaque de verrouillage coulissant, sous l'action de ressort de rappel, sur la portion médiane de ladite première partie.

Des moyens sont prévus pour maintenir la plaque de verrouillage en « position armée », c'est-à-dire dans une position où l'extension en forme de crochet peut traverser librement la portion médiane de la première partie et la plaque de verrouillage.

Lors de la traversée des deux ouvertures, l'extension en forme de crochet libère la plaque de verrouillage qui, sous l'action des ressorts, s'insère sous ladite extension.

Si les surfaces devant coopérer (crochet et plaque) sont plus ou moins noyées dans la terre, la plaque s'insère imparfaitement sous le crochet en donnant l'illusion d'un verrouillage qui, en fait, est imparfait.

De ce fait, lors du travail, les chocs et les vibrations peuvent entraîner le décrochage et la chute de l'outil relié imparfaitement au bras de l'engin.

Pour remédier à cet inconvénient, il a été prévu de munir le crochet d'au moins un doigt latéral et de prévoir, tant sur l'ouverture de la première partie que sur celle de la plaque de verrouillage, une échancrure de passage dudit doigt. La traversée des deux ouvertures n'est donc possible que lorsque la plaque de verrouillage est en position armée.

Dès que la plaque de verrouillage commence à s'insérer sous le crochet sous l'action des ressorts, le doigt précité s'étend au-dessus de la plaque de verrouillage, s'opposant au pivotement de la seconde partie.

Ce dispositif de sécurité est particulièrement efficace, mais il dépend de l'action des ressorts qui s'opposent au recul de la plaque de verrouillage.

Si les ressorts se rompent ou se décrochent, plus rien ne s'oppose au recul de la plaque de verrouillage, recul qui se trouve facilité lorsque la plaque de verrouillage est placée dans une position sensiblement verticale car à ce moment elle glisse vers le bas, sous son propre poids, pour occuper une position où les échancrures et ouvertures précitées sont en coïncidence : le décrochage de l'outil est possible.

Le dispositif de sécurité de l'invention, qui remédie à l'inconvénient ci-dessus, est remarquable en ce que la plaque de verrouillage est pourvue d'un organe de butée qui limite le déplacement de ladite plaque sous l'effet de son poids de façon à empêcher la mise en coïncidence de l'échancrure de la plaque et de celle de la partie de l'attache supportant ladite plaque.

La présente invention sera mieux comprise par la description qui va suivre faite en se référant aux dessins annexés à titre d'exemple indicatif seulement sur lesquels :
- la figure 1 est une vue en coupe effectuée selon la ligne I-I de la figure 2, montrant une attache conforme à l'invention, la plaque de verrouillage étant représentée en position armée, ni l'outil, ni le bras de l'engin ne sont représentés ;
- la figure 2 est la vue de dessus de la figure 1 ;
- la figure 3 est une vue analogue à la figure 2, les deux parties de l'attache étant verrouillées l'une sur l'autre ;
- la figure 4 est une vue analogue à la figure 1, montrant la mise en œuvre du dispositif de l'invention pour le cas où les ressorts usuels de rappel de la plaque de verrouillage sont absents.
- la figure 5 est la vue de dessus de la figure 4.

De la façon connue, on voit que l'attache rapide est constituée de deux parties 1 et 2, la première partie 1 étant fixée au bras de l'engin (non représenté), tandis que la seconde partie est fixée à l'outil (un godet non représenté, par exemple).

Chaque partie affecte sensiblement la forme d'un étrier, celle 1 présentant un berceau 3, susceptible d'être engagé sous un arbre 4 de la seconde partie par une manœuvre judicieuse du bras de l'engin.

La portion médiane de la partie 2 présente un crochet 5 sous lequel peut s'engager une plaque de verrouillage 6, coulissant sur la portion médiane de la partie 1, sous l'action de ressorts 7.

La portion médiane précitée et la plaque de verrouillage présentent chacune une ouverture respectivement 8 et 9 et à une extrémité les ouvertures sont échancrées pour permettre le passage de doigts. 10 latéraux portés par le crochet 5.

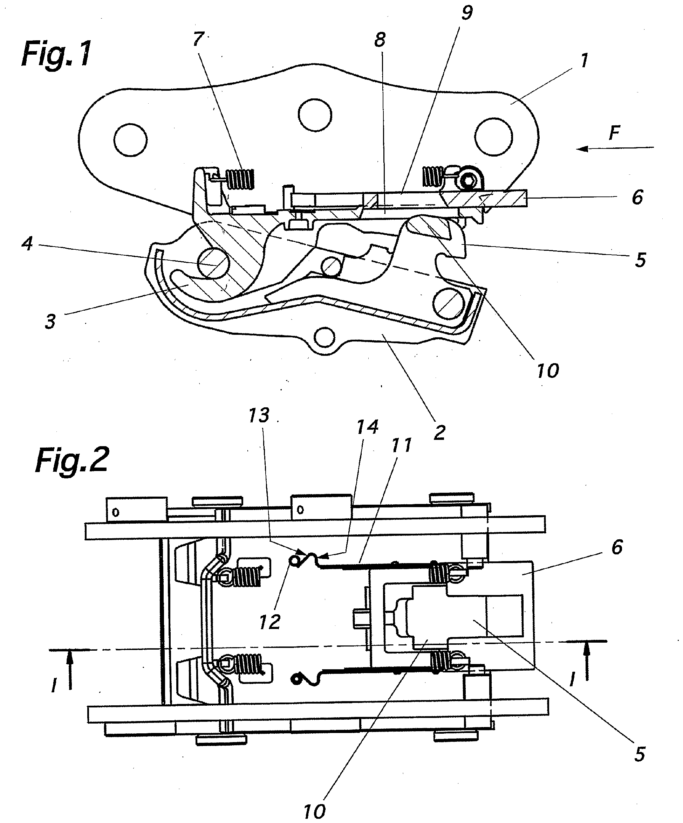

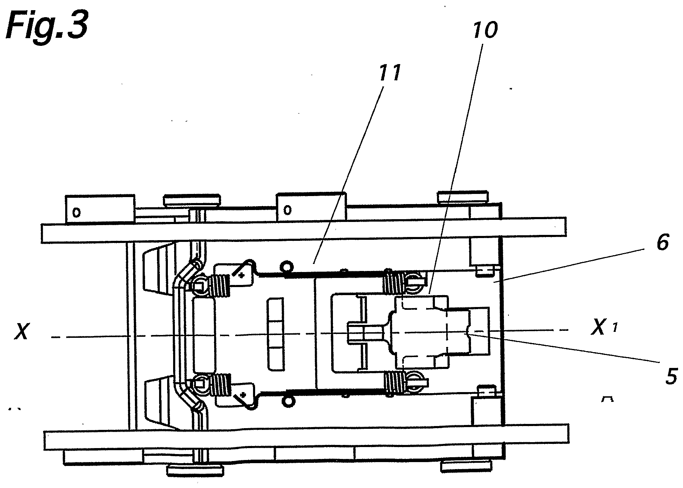

Lorsque le crochet 5 traverse les deux ouvertures à partir de la position représentée sur la figure 1, la plaque de verrouillage, sous l'action des ressorts 7 s'insère complètement sous le crochet, c'est la position montrée sur la figure 3.

Si, en raison de la présence de terre par exemple, la plaque de verrouillage ne s'insère pas complètement sous le crochet malgré l'action des ressorts 7, le décrochage des deux parties n'est pas possible car les doigts 10 s'étendent au-dessus de la plaque de verrouillage. C'est ce dispositif de sécurité qui a fait l'objet du brevet français N° 2809779.

Ce dispositif de sécurité peut s'avérer insuffisant si les ressorts 7 se rompent.

Dans ce cas, en effet, plus rien ne s'oppose au déplacement de la plaque de verrouillage pour que celle-ci glisse sous l'action de son poids et vienne occuper la position montrée sur la figure 1, position où le crochet 5 peut traverser librement la portion médiane de la partie 1 et la plaque de verrouillage et ce malgré la présence des doigts 10.

Le dispositif de l'invention, qui remédie à cet inconvénient, est remarquable en ce que la plaque de verrouillage est associée à un organe qui limite le recul de ladite plaque sous l'effet de son poids.

Selon un mode de réalisation, cet organe est constitué, dans sa forme la plus simple, par une lame flexible 11 s'étendant sensiblement dans la direction de déplacement da la plaque de verrouillage coulissante et dont l'extrémité libre peut prendre appui contre une butée 12 de la portion médiane de la partie 1.

L'extrémité libre de la lame 11 présente une partie oblique 13, ou rampe, se raccordant à ladite lame par une partie 14 s'étendant, sensiblement, perpendiculairement au plan de ladite lame.

La butée 12 est constituée, de préférence, par un doigt cylindrique disposé, sensiblement, tangentiellement au plan de la lame 11 et en avant de la rampe 13 lorsque la plaque de verrouillage est en position armée (fig.1).

Comme montré sur les dessins on utilise deux lames 11 disposées symétriquement par rapport à l'axe XX₁.

Lorsque le crochet 5 traverse les ouvertures 8 et 9, la plaque 6 se déplace selon la flèche F sous l'action des ressorts 7, les lames 11 fléchissent et les « têtes » 13-14 viennent occuper la position montrée sur la figure 3.

Si les ressorts se rompent, plus rien ne s'oppose, théoriquement, au recul de la plaque 6.

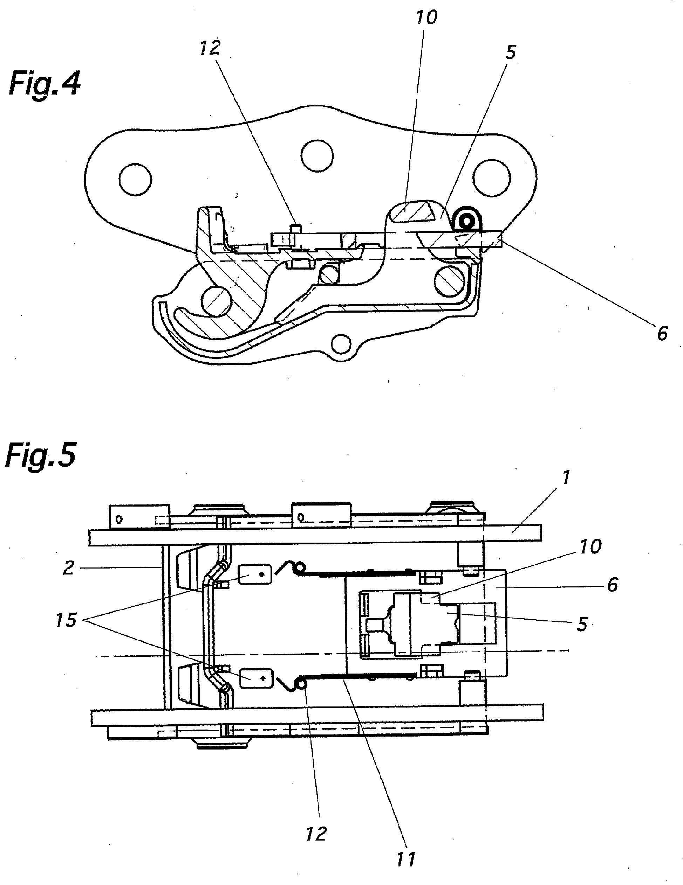

En fait, ce recul est limité par le dispositif de l'invention : les parties 14 des lames prenant appui contre les doigts 12, comme montré sur la figure 5. Sur cette figure, on voit clairement que les doigts 10 du crochet s'étendent au-dessus de la plaque de verrouillage, le décrochage est donc impossible malgré l'absence des ressorts 7.

Naturellement, la force nécessaire pour faire fléchir les lames 11 est bien inférieure à celle délivrée par les ressorts 7 ou à celle qui peut être appliquée sur la plaque pour l'armer.

Le dispositif de sécurité est complété par des capteurs 15 disposés sur la portion médiane de la partie 1 au-dessus desquels s'étendent les têtes 13-14 lorsque les deux parties sont correctement verrouillées l'une sur l'autre.

De cette façon il est possible d'envoyer un signal à la cabine de conduite de l'engin qui indique la qualité du verrouillage, puisque celui-ci est fonction de la position des têtes précitées.

## Revendications

1. Attache rapide comportant un dispositif de sécurité et deux parties (1 et 2) dont l'une est fixée au bras de l'engin tandis que la second est fixée à l'outil, la première partie (1) comportant un berceau (3), susceptible d'être inséré sous un arbre (4) de l'autre partie (2) qui présente une extension (5) en forme de crochet, pourvu d'au moins un doigt latéral (10), susceptible de traverser des ouvertures échancrées (9 et 8) de la première partie (1) et d'une plaque de verrouillage (6) coulissant sur la portion médiane de ladite première partie pour s'insérer sous le crochet (5) sous l'action de ressorts (7), **caractérisé en ce qu'**il est prévu un organe (12) de butée pour la plaque de verrouillage, l'organe de butée limitant le recul de ladite plaque de façon à empêcher la mise en coïncidence des ouvertures échancrées précitées lorsque les ressorts (7) se rompent dans la position dans laquelle les deux parties (1 et 2) sont verrouillées l'une à l'autre.

2. Attache rapide selon la revendication 1, **caractérisée en ce que** l'organe de butée est constitué par, au moins, une lame flexible (11) dont le plan s'étend selon la direction de déplacement de la plaque de verrouillage (6) sur laquelle ladite lame est fixée, l'extrémité libre de ladite lame étant conformée pour prendre appui contre une butée (12) de la première partie (1) interposée sur la trajectoire de ladite lame pour limiter le recul de la plaque de verrouillage sous l'action de son poids.

3. Attache rapide selon la revendication 2, **caractérisée en ce que** l'extrémité libre de la lame flexible présente une partie oblique (13) se raccordant à ladite lame par une partie (14) s'étendant, sensiblement, perpendiculairement au plan de ladite lame.

4. Attache rapide selon la revendication 3, **caractérisée en ce que**, lorsque les deux parties de l'attache sont correctement verrouillées, l'extrémité de la lame flexible s'étend au dessus d'un capteur (15) permettant d'envoyer à la cabine de conduite de l'engin un signal mettant en évidence la qualité du verrouillage.

## Patentansprüche

1. Schnellbefestigungsmechanismus, aufweisend eine Sicherheitsvorrichtung und zwei Teile (1 und 2), von denen einer am Arm des Geräts befestigt ist, wohingegen der zweite am Werkzeug befestigt ist, wobei der erste Teil (1) einen Träger (3) aufweist, der geeignet ist, unter einer Welle (4) des anderen Teils (2) eingesetzt zu sein, der eine hakenförmige Erweiterung (5) aufweist, versehen mit mindestens einem seitlichen Finger (10), der geeignet ist, ausgesparte Öffnungen (9 und 8) des ersten Teils (1) und einer Verriegelungsplatte (6) zu durchqueren, die über den mittleren Abschnitt des ersten Teils gleitet, um unter der Wirkung von Federn (7) unter dem Haken (5) einzurasten, **dadurch gekennzeichnet, dass** ein Anschlagorgan (12) für die Verriegelungsplatte vorgesehen ist, wobei das Anschlagorgan den Rückzug der Platte derart begrenzt, dass das Herstellen von Kongruenz der vorgenannten ausgesparten Öffnungen verhindert wird, wenn die Federn (7) in der Position brechen, in welcher die zwei Teile (1 und 2) miteinander verriegelt sind.

2. Schnellbefestigungsmechanismus nach Anspruch 1, **dadurch gekennzeichnet, dass** das Anschlagorgan aus mindestens einer flexiblen Lamelle (11) besteht, deren Ebene sich gemäß der Bewegungsrichtung der Verriegelungsplatte (6) erstreckt, auf welcher die Lamelle befestigt ist, wobei das freie Ende der Lamelle ausgebildet ist, um sich auf einem Anschlag (12) des ersten Teils (1) abzustützen, der auf der Bahn der Lamelle angeordnet ist, um den Rückzug der Verriegelungsplatte aufgrund der Wirkung ihres Gewichts zu begrenzen.

3. Schnellbefestigungsmechanismus nach Anspruch 2, **dadurch gekennzeichnet, dass** das freie Ende der flexiblen Lamelle einen schrägen Teil (13) aufweist, der sich an die Lamelle mittels eines Teils (14) anschließt, der sich im Wesentlichen senkrecht zur Ebene der Lamelle erstreckt.

4. Schnellbefestigungsmechanismus nach Anspruch 3, **dadurch gekennzeichnet, dass**, wenn die zwei Teile des Befestigungsmechanismus korrekt verriegelt sind, sich das Ende der flexiblen Lamelle über einem Sensor (15) erstreckt, der erlaubt, an die Fahrerkabine des Geräts ein Signal zu senden, welches über die Qualität der Verriegelung Auskunft gibt.

## Claims

1. Quick-fastening device comprising a safety device and two portions (1 and 2), one of which is fixed to the arm of the machine, whereas the second is fixed to the tool, the first portion (1) comprising a cradle (3) that is insertable under a shaft (4) of the other portion (2) having an extension (5) in the shape of a hook having at least one lateral lug (10) that can pass through notched openings (9 and 8) of the first portion (1) and of a locking plate (6) sliding on the median portion of said first portion in order to be inserted under the hook (5) under the action of springs (7), **characterized in that** the locking plate is provided with an abutment member (12) that limits the backward movement of said plate in order to prevent the aforementioned notched openings from coinciding when the springs (7) break in the portion in which the two portions (1 and 2) are mutually locked.

2. Quick-fastening device according to claim 1, **characterized in that** said abutment member is comprised of at least one flexible blade (11), the plane of which extends in the direction of movement of the locking plate (6), on which said blade is fixed, the free end of said blade being shaped to take support against an abutment (12) of the first portion (1) interposed in the path of said blade to limit the backward movement of the locking plate under the action of its weight.

3. Quick-fastening device according to claim 2, **characterized in that** the free end of the flexible blade has an oblique portion (13) connected to said blade by a portion (14) extending substantially perpendicular to the plane of said blade.

4. Quick-fastening device according to claim 3, **characterized in that**, when the two portions of the fastening device are properly locked, the end of the flexible blade extends above a sensor (15) that makes it possible to send a signal showing the quality of the locking to the operating cab of the machine.
